# FASCICULE DE BREVET EUROPEEN

(11) **EP 3 974 632 B1**
(45) Date de publication et mention de la délivrance du brevet: **08.05.2024**
(21) Numéro de dépôt: 21195886.3
(22) Date de dépôt: 10.09.2021
(51) Int. Cl.: F02B 77/02, F02B 77/11, F01P 3/02

(54) **REVÊTEMENT THERMIQUE POUR UN MOTEUR À COMBUSTION INTERNE À ALLUMAGE COMMANDÉ**
THERMISCHE BESCHICHTUNG FÜR EINEN FREMDGEZÜNDETEN VERBRENNUNGSMOTOR
THERMAL COATING FOR AN INTERNAL COMBUSTION ENGINE WITH SPARKED IGNITION

(30) Priorité: 25.09.2020 FR 2009774
(43) Date de publication de la demande: 30.03.2022
(73) Titulaire: NEW H POWERTRAIN HOLDING, S.L.U., 47008 Valladolid (ES)
(72) Inventeur: ABRAMCZUK, Marek, 94260 Fresnes (FR); LIBERT, Cédric, 91470 LES MOLIERES (FR)
(74) Mandataire: Renault Group

(56) Documents cités:
- WO-A1-2015/025208
- WO-A2-2017/146598
- FR-A- 817 074
- US-A- 3 552 370
- US-A- 3 976 809
- US-A1- 2019 107 045

## Description

### Domaine technique de l'invention

La présente invention concerne un moteur à combustion interne, notamment à allumage commandé, et plus particulièrement le dépôt d'un revêtement thermique sur des zones de la chambre de combustion soumises à une température élevée. De tels moteurs sont connues des documents WO2017/146598A2 et WO2015/025208A1.

### Arrière-plan technique

Les transferts thermiques sont une des sources importantes de perte de rendement dans les moteurs à combustion interne. Il est généralement connu qu'une combustion plus complète du carburant peut être obtenue dans un moteur à combustion interne si des températures plus élevées peuvent être maintenues dans les chambres de combustion durant la durée totale du cycle moteur.

Dans la chambre de combustion, les différentes surfaces exposées sont généralement réalisées à partir d'un métal conducteur de chaleur tel que l'aluminium ou les alliages de fer. Par conséquent, des quantités importantes de chaleur sont transférées via ces éléments conducteurs en dehors de la chambre de combustion provoquant ainsi une perte d'énergie irréversible. Le flux de chaleur ou flux thermique, noté φ (W), par convection entre les gaz brulés issus de la combustion et une paroi de la chambre de combustion est égal au produit du coefficient de transfert thermique H (W.m⁻².K⁻¹), de la surface S (m²) et de la différence de température entre le gaz brûlé et la paroi de la chambre de combustion ΔT(K).

Le flux de chaleur φ (W) traversant une paroi de la chambre de combustion par conduction est proportionnel au coefficient de conductivité thermique λ (W.nr⁻¹.K⁻¹) du matériau constituant la paroi et à la différence de températures entre les deux surfaces délimitant la paroi d'épaisseur e (m), le flux de chaleur est inversement proportionnel à l'épaisseur e de la paroi. Afin de limiter les pertes thermiques au sein de la chambre de combustion à travers une paroi, des matériaux à faible conductivité thermique sont généralement utilisés. En effet, des revêtements dits adiabatiques de faible épaisseur, généralement inférieure à 500 microns, ont été développés afin de limiter les transferts thermiques vers la paroi de la chambre de combustion.

Un inconvénient de ce type de revêtement est l'augmentation de la température moyenne du revêtement au cours des cycles moteurs, puis, la stabilisation de la température moyenne à un niveau élevé. De ce fait, les gaz frais sont réchauffés lors de la phase d'admission ce qui provoque une baisse du rendement volumétrique, ce déficit de remplissage doit donc être compensé par le turbocompresseur.

Pour limiter le phénomène de réchauffement des gaz frais, des matériaux à faible inertie thermique, principalement composés de céramiques poreuses sont utilisés, tels que ceux décrits dans le document WO 2011/027214 A2. Ce type de revêtement présentant une épaisseur comprise entre 50 et 200 microns permet de réduire le flux thermique entre la chambre de combustion et le circuit de refroidissement du moteur tout en minimisant l'impact de la température de paroi sur le remplissage moteur en air frais.

Dans le cas des moteurs à allumage commandé, une des principales difficultés liées à l'augmentation de la température de la chambre de combustion suite à l'isolation thermique est l'apparition plus fréquente du phénomène de cliquetis.

Par définition, un cliquetis est une combustion anormale entraînant une résonnance de l'explosion sur les points chauds de la paroi axiale de la chambre de combustion, du piston ou bien sur les soupapes d'échappement. Un moteur à allumage commandé, contrairement à un moteur diesel, requiert la formation d'une étincelle au sein de la chambre de combustion pour démarrer la phase de combustion. L'étincelle de la bougie produit un front de flamme qui se diffuse directement jusqu'à la paroi axiale de la chambre de combustion. Un niveau élevé de la température de la paroi axiale provoque un échauffement précoce des gaz frais lors de la phase d'admission. Lorsque la température des gaz frais augmente, le phénomène de cliquetis peut apparaitre précocement au niveau des points de forte charge et s'initier au niveau des points chauds de la chambre de combustion où la vitesse de flamme diminue, c'est-à-dire principalement sur la périphérie de la chambre de combustion et notamment sur la paroi axiale.

Une réduction de l'avance à l'allumage, c'est-à-dire l'avancement de la production de l'étincelle nécessaire au démarrage de la combustion permet d'éviter le phénomène de cliquetis, mais au détriment du rendement.

La présente invention a pour but d'apporter une solution parallèle au problème de remplissage en air frais et à l'apparition des cliquetis via une optimisation des revêtements thermiques mis en place sur les parois de la chambre de combustion.

### Résumé de l'invention

L'invention propose un moteur à combustion interne à allumage commandé selon la revendication 1.

Selon d'autres caractéristiques du moteur à combustion interne à allumage commandé:
- le revêtement thermique s'étend à partir du centre du toit de la chambre de combustion selon une direction radiale vers la paroi axiale de la chambre de combustion du cylindre jusqu'à 30% à 80% du diamètre de la surface supérieure pourvue d'un revêtement thermique,
- l'épaisseur du revêtement thermique est uniformément décroissante radialement,
- le revêtement thermique est constitué d'une première portion englobant les deux conduits de soupape d'échappement et d'une deuxième portion englobant les conduits de soupape d'admission ,
- au moins un revêtement thermique est de type barrière thermique,
- au moins un revêtement thermique est un matériau dont l'effusivité thermique est inférieure à 500 W.K⁻¹.m⁻².s^{1/2},
- la première portion du revêtement thermique est de type barrière thermique et la deuxième portion du revêtement thermique est un matériau dont l'effusivité thermique est inférieure à 500 W.K⁻¹.m⁻².s^{1/2}.

L'invention propose aussi un procédé de fabrication d'un moteur à combustion interne à allumage commandé comportant au moins une étape de dépôt d'un revêtement thermique sur une surface supérieure du toit de la chambre de combustion en vis-à-vis de la tête de piston pour minimiser les transferts thermiques vers des pièces à l'extérieur de la chambre de combustion et ainsi maintenir une température plus élevée à l'intérieur de la chambre de combustion.

Selon d'autres caractéristiques du procédé de fabrication d'un moteur à combustion interne à allumage commandé, le procédé comporte une première étape de dépôt d'une première portion du revêtement thermique et une deuxième étape de dépôt d'une deuxième portion du revêtement thermique.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en coupe partielle d'un moteur à combustion interne comportant un revêtement thermique selon l'invention ;
[Fig.2] - la figure 2 est une vue partielle de dessous d'une culasse d'un moteur à combustion interne comportant un revêtement thermique selon l'invention ;
[Fig. 3] - la figure 3 est une vue analogue à celle de la figure 2 sur laquelle le revêtement thermique est constitué de deux portions selon l'invention ;
[Fig.4] - la figure 4 est une vue schématique partielle de face d'une culasse d'un moteur à combustion interne munie d'un revêtement thermique constitué de deux portions d'épaisseur maximale différente selon l'invention ;
[Fig. 5] - la figure 5 est une vue partielle de dessous d'une culasse d'un moteur à combustion interne comportant un revêtement thermique réalisé en deux pièces distinctes selon une deuxième variante de l'invention.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal.

Dans la description qui va suivre, des éléments identiques, similaires ou analogues seront désignés par les mêmes références alphanumériques.

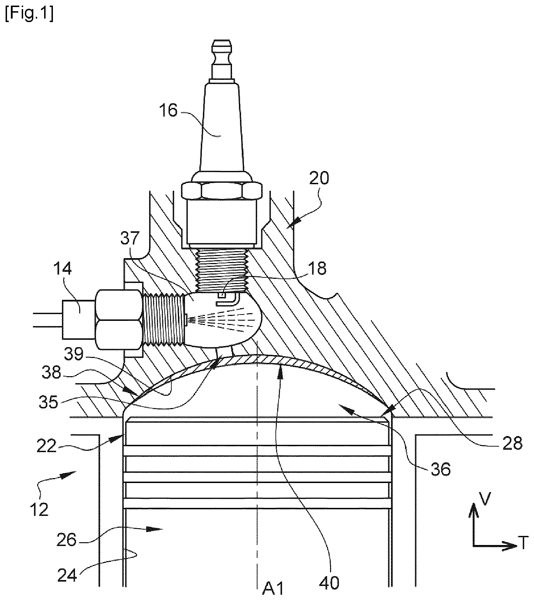

La figure 1 représente schématiquement un moteur à combustion interne à allumage commandé 12 munie d'une préchambre de combustion 37.

La culasse 20 est agencée au-dessus d'un carter- comportant au moins un cylindre 22 qui s'étend selon un axe vertical A1 et délimité par une paroi axiale 24 périphérique dans laquelle un piston 26 coulisse suivant un mouvement rectiligne alternatif le long de l'axe A1.

Une chambre de combustion 36 est délimitée ainsi par une partie inférieure de la culasse appelée aussi le toit 38 de la chambre de combustion 36, par la paroi axiale 24 et par le piston 26. Le volume de ladite chambre varie avec le coulissement du piston. La chambre de combustion 36 du moteur à combustion interne à allumage commandé 12 est une enceinte capable de résister à de brusques changements de pression et de température, dans laquelle on déclenche volontairement une combustion d'un mélange d'air et de carburant, le carburant étant de l'essence.

Dans certains moteurs à combustion interne à allumage commandé 12 tels que celui représenté à la figure 1, une chambre de précombustion 37 est agencée en vis-à-vis de la chambre de combustion 36 et les deux chambres 36, 37 communiquent par un conduit de liaison 35. La préchambre de combustion 37 comporte un injecteur 14 et une bougie d'allumage 16 dont l'extrémité constitue un point d'allumage 18 où l'étincelle de la bougie d'allumage 16 produit un front de flamme qui se propage via le conduit de liaison 35 à l'intérieur de la chambre de combustion 36 jusqu'à la paroi axiale 24 de la chambre de combustion 36 et ainsi brûler le mélange air carburant. La chambre de combustion 36 comporte une soupape d'admission et une soupape d'échappement non visibles à la figure 1.

L'invention concerne également un moteur à allumage commandé non équipé d'une préchambre de combustion 37, dans ce cas, l'allumage s'effectue via une bougie d'allumage 16 agencée dans la chambre de combustion 36.

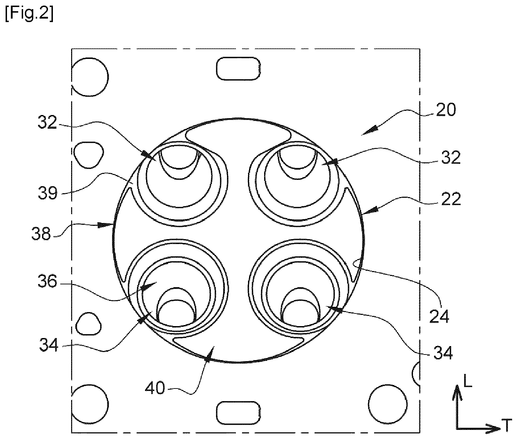

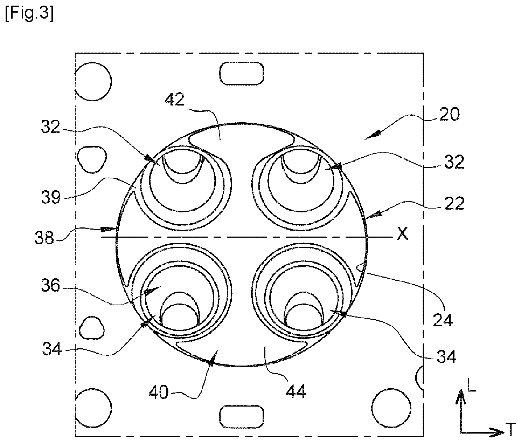

La figure 2 est une représentation partielle d'une culasse 20 du moteur à combustion interne 12 de la figure 1, vue de dessous. Par convention, l'axe longitudinal L est orienté de l'arrière vers l'avant de la culasse 20 du moteur à combustion interne à allumage commandé 12, ce qui correspond à une orientation du haut vers le bas en considérant les figures 2 et 3.

La partie supérieure de la culasse 20 comporte ici quatre orifices circulaires constituant les ouvertures de quatre conduits composés de deux conduits de soupape d'admission 34 et de deux conduits de soupape d'échappement 32. La fermeture de la partie supérieure du cylindre 22 est généralement assurée par la culasse 20 et les soupapes d'admissions et d'échappement 34, 32.

Les combustions à l'intérieur de la chambre de combustion 36 entraînent des mouvements de coulissement du piston 26 permettant de générer la rotation d'un vilebrequin, cette rotation est ensuite transmise aux roues du véhicule. Un revêtement thermique 40 est déposé sur une surface supérieure 39 du toit 38 de la chambre de combustion 36 en vis-à-vis de la tête de piston 28 tel que représenté aux figures 1 et 2. Le revêtement thermique 40 du toit 38 de la chambre de combustion 36 est déposé à partir du centre selon une direction radiale vers la paroi axiale 24 de la chambre de combustion 36 jusqu'à 30% à 80% du diamètre de la surface supérieure 39.

Le revêtement thermique 40 s'étend du centre du toit 38 de la chambre de combustion 36 vers le rebord d'extrémité radiale en fonction du pourcentage de recouvrement du revêtement thermique. Selon l'invention, les zones des conduits de soupape d'échappement 32 et de soupape d'admission 34 sont dépourvues de revêtement thermique 40, cela permet de privilégier les transferts thermiques dans les zones des conduits de soupape 32, 34 qui sont davantage en contact avec des gaz chauds.

Dans le cas d'un moteur à combustion interne à allumage commandé 12 muni d'une préchambre de combustion 37 tel qu'illustré à la figure 1, le revêtement thermique 40 est aussi déposé sur la paroi axiale 24 de la chambre de combustion 36.

Avantageusement, l'épaisseur e du revêtement thermique 40 du toit 38 de la chambre de combustion 36 est variable. L'épaisseur maximale e1 du revêtement thermique 40 est située au centre du toit 38 de la chambre de combustion 36 puis l'épaisseur e du revêtement thermique 40 est uniformément décroissante radialement vers la paroi axiale 24 de la chambre de combustion 36.

L'épaisseur maximale e1 du revêtement thermique 40 déposé au centre de la surface supérieure 39 est comprise entre 100 et 500 microns et l'épaisseur e du revêtement thermique 40 déposé à proximité de la paroi axiale 24 de la chambre de combustion 36 est comprise entre 20 et 100 microns.

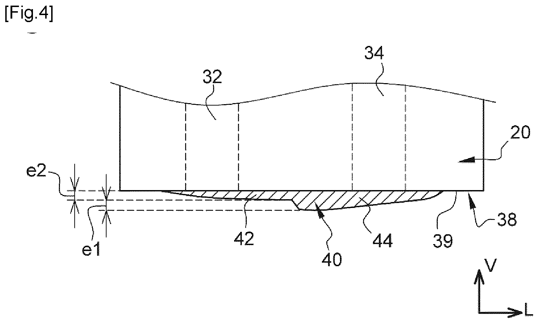

Selon une variante de l'invention illustrée aux figures 3 et 4, le revêtement thermique 40 du toit de la chambre de combustion 38 est constitué de deux portions 42, 44 séparées suivant une ligne droite X normale à l'axe A1 délimitant une première portion 42 de revêtement thermique 40 englobant les deux conduits de soupape d'échappement 32, et une deuxième portion 44 de revêtement thermique 40 englobant les conduits de soupape d'admission 34. Le revêtement thermique 40 du toit de la chambre de combustion 38 est ainsi déposé de manière différente si celui-ci est agencé côté admission ou bien côté échappement.

De manière préférentielle, l'isolation sera plus importante côté échappement afin de préserver une température de paroi proche de la température des gaz, notamment des gaz brulés.

Côté admission, un meilleur refroidissement de la surface supérieure du toit de la chambre de combustion englobant les conduits de soupape d'admission est prévu pour préserver une température d'air d'admission la plus basse possible. Cela permet d'une part, d'améliorer le remplissage en air frais et donc le rendement du moteur, et d'autre part, de limiter les risques d'apparition des phénomènes de cliquetis.

Ainsi, le revêtement thermique 40 déposé sur la première portion 42 sera d'une effusivité moindre que celui déposé dans la seconde portion 44.

Selon un mode de réalisation de l'invention illustré à la figure 4, l'épaisseur maximale e1 d'isolant dans la première portion 42 est supérieure à l'épaisseur maximale e2 d'isolant dans la seconde portion 44. Par conséquent, la première portion 42 du revêtement thermique 40 a une épaisseur maximale e1 et la deuxième portion 44 a une épaisseur maximale e2, avec e1 strictement supérieure à e2.

La différence des épaisseurs maximales e1 et e2 des deux portions 42, 44 du revêtement thermique 40 constitue un pallier d'épaisseur. La première portion 42 englobant les conduits de soupape d'échappement 32 est pourvue d'un revêtement thermique 40 mince d'épaisseur maximale e1, et la deuxième portion 44 englobant les conduits de soupapes d'admission 34 est pourvue d'un revêtement thermique 40 d'épaisseur maximale plus importante e2.

L'épaisseur maximale e1 ou e2 de chaque portion 42, 44 du revêtement thermique 40 est au centre de la chambre de combustion 36 puis l'épaisseur e décroit radialement vers la paroi axiale 24 de la chambre de combustion 36.

Selon un mode de réalisation de l'invention non représenté, le revêtement thermique 40 concerne uniquement la première portion 42 englobant les conduits de soupape d'échappement 32.

Selon un autre mode de réalisation de l'invention
Préférentiellement, le revêtement thermique 40 est un revêtement barrière thermique. Par définition, un revêtement barrière thermique est un revêtement constitué de plusieurs couches déposées sur des surfaces subissant des températures élevées afin de minimiser le transfert thermique depuis la chambre de combustion 36 vers le matériau constituant les parois principales de la culasse ou du bloc moteur.

Dans la présente invention, le revêtement thermique 40 est déposé sur la surface supérieure 39 du toit 38 de la chambre de combustion 36 pour former une barrière thermique et permettre ainsi de maintenir des températures plus élevées à l'intérieur de la chambre de combustion 36.

La combustion à des hautes températures permet une combustion plus complète du combustible, augmentant ainsi les performances et réduisant les émissions de gaz polluants. L'utilisation de ce type de revêtement permet donc d'atteindre des températures de fonctionnement plus élevées tout en limitant l'exposition thermique des composants structurels et ainsi prolonger la vie de la pièce en limitant les phénomènes d'oxydation et de fatigue thermique.

Le revêtement barrière thermique est formé sur la surface de combustion en déposant successivement des couches de différents matériaux appliqués de préférence en utilisant un procédé de projection au plasma.

Le revêtement barrière thermique est réalisé par l'application de couches successives sur une surface métallique. Par exemple, le revêtement barrière thermique est constitué d'une première couche en alliage de nickel et d'aluminium, d'une deuxième couche formée d'un mélange de l'alliage de la première couche avec de l'oxyde de zirconium et une troisième couche principalement constituée d'oxyde de zirconium. De manière générale, les matériaux utilisés pour la réalisation des revêtements de type barrière thermique sont à base de zirconium (Zr), d'alumine (Al₂O₃) ou de silice (SiO₂) mais aussi des céramiques telles que les sialons (Si₃N₄), le Yttria-stabilized zirconia (YSZ) et le BNT (BaNd₂Ti₃O₁₀).

Selon un deuxième mode de réalisation de l'invention, le revêtement thermique utilisé est un revêtement à effet de swing de température c'est-à-dire un matériau à faible effusivité thermique dont l'effusivité thermique est préférablement inférieure à 500 W.K⁻¹.m⁻².s^{1/2}. De manière générale, les matériaux utilisés pour la réalisation des revêtements de type à effet de swing de température sont des matériaux tels que le dioxyde de zirconium (ZrO₂), l'alumine (Al₂O₃) et la silice (SiO₂), ces matériaux ont un taux de porosité supérieur à 30%.

Généralement l'élaboration et la mise en oeuvre d'un revêtement de type barrière thermique est moins complexe et moins onéreuse qu'un revêtement à effet de swing de température car ce dernier requiert l'utilisation de matériaux poreux à très faible inertie thermique.

Selon un troisième mode de réalisation de l'invention, la première portion 42 du revêtement thermique 40 est de type barrière thermique et la deuxième portion 44 est un matériau dont l'effusivité thermique est inférieure à 500 W.K⁻¹.m⁻².s^{1/2}.

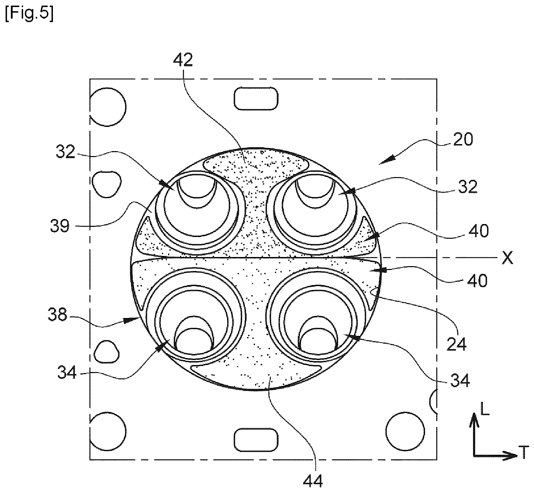

Selon une variante du revêtement thermique 40 illustrée à la figures 5, le revêtement thermique 40 du toit 38 de la chambre de combustion 36 est réalisé en deux pièces distinctes correspondant chacune à une portion 42, 44 du revêtement thermique. La première portion 42 est réalisée à partir d'un premier type de revêtement thermique 40 et la deuxième portion 44 est réalisée à partir d'un deuxième type de revêtement thermique 40.

Selon un mode de réalisation préférentiel de l'invention, la première portion 42 du revêtement thermique 40 est de type barrière thermique et la deuxième portion 44 du revêtement thermique 40 est un matériau dont l'effusivité thermique est inférieure à 500 W.K⁻¹.m⁻².s^{1/2}.

En effet, un revêtement de type barrière thermique est appliqué sur la première portion 42 du revêtement thermique 40 englobant les conduits de soupape d'échappement 32 afin de limiter les transferts thermiques, les transferts thermiques étant plus importants à proximité des conduits de soupape d'échappement 32. Afin de réduire le risque d'apparition de cliquetis à partir des points chauds, il est préférable de ne pas déposer de revêtement de type barrière thermique dans les zones des conduits de soupape d'échappement 32.

Le revêtement du type à effet swing de température est quant à lui appliqué sur la deuxième portion 42 du revêtement thermique 40 englobant les conduits de soupape d'admission afin de limiter le réchauffement de l'air frais admis dans un cylindre 22.

### LEGENDE :

- 12 :: moteur à combustion interne à allumage commandé
- 14 :: injecteur
- 16 :: bougie d'allumage
- 18 :: point d'allumage
- 20 :: culasse
- 22 :: cylindre
- 24 :: paroi axiale
- 26 :: piston
- 28 :: tête du piston
- 32 :: conduit de soupape d'échappement
- 34 :: conduit de soupape d'admission
- 35 :: conduit de liaison
- 36 :: chambre de combustion
- 37 :: préchambre de combustion
- 38 :: toit de la chambre de combustion
- 39 :: surface supérieure du toit de la chambre de combustion
- 40 :: revêtement thermique
- 42 :: première portion
- 44 :: deuxième portion

## Revendications

1. Moteur à combustion interne à allumage commandé (12) comportant :
- au moins un cylindre (22) dans lequel un piston (26) est monté coulissant,
- au moins deux conduits de soupape (32, 34) dont un conduit de soupape d'admission (34) et un conduit de soupape d'échappement (32),
- une chambre de combustion (36) délimitée par le toit (38) de la chambre de combustion (36), par une paroi axiale (24) périphérique et par la tête du piston (28),
- au moins un revêtement thermique (40) déposé sur une surface supérieure (39) du toit (38) de la chambre de combustion (36) en vis-à-vis de la tête de piston (28) pour minimiser les transferts thermiques vers des pièces à l'extérieur de la chambre de combustion (36) et ainsi maintenir une température plus élevée à l'intérieur de la chambre de combustion (36) ;
**caractérisé :**
- **en ce que** les zones des conduits de soupape d'échappement (32) et de soupape d'admission (34) de la surface supérieure (39) sont dépourvues de revêtement thermique (40),
- et **en ce que** l'épaisseur e du revêtement thermique (40) est variable avec au moins une épaisseur maximale e1,e2 située au centre de la chambre de combustion (36), puis l'épaisseur e du revêtement thermique (40) est décroissante selon une direction radiale vers la paroi axiale (24) de la chambre de combustion (36).

2. Moteur à combustion interne à allumage commandé (12) selon la revendication 1, **caractérisé en ce que** le revêtement thermique (40) s'étend à partir du centre du toit (38) de la chambre de combustion (36) selon une direction radiale vers la paroi axiale (24) de la chambre de combustion (36) jusqu'à 30% à 80% du diamètre de la surface supérieure (39) pourvue d'un revêtement thermique (40).

3. Moteur à combustion interne à allumage commandé (12) selon l'une quelconque des revendications précédentes, **caractérisé en ce que** l'épaisseur e du revêtement thermique (40) est uniformément décroissante radialement.

4. Moteur à combustion interne à allumage commandé (12) selon l'une quelconque des revendications précédentes, **caractérisé en ce que** le revêtement thermique (40) est constitué d'une première portion (42) englobant les deux conduits de soupape d'échappement (32).

5. Moteur à combustion interne à allumage commandé (12) selon la revendication 4, **caractérisé en ce que** le revêtement thermique (40) est constitué de la première portion (42) englobant les deux conduits de soupape d'échappement (32) et d'une deuxième portion (44) englobant les conduits de soupape d'admission (34) ,lesdites portions (42,44) présentant une effusivité différente ou une épaisseur maximale de revêtement thermique (40) différente.

6. Moteur à combustion interne à allumage commandé (12) selon la revendication 5, **caractérisé en ce que** l'épaisseur maximale e1 de la première portion (42) du revêtement thermique (40) est plus importante que l'épaisseur maximale e2 de la deuxième portion (44) du revêtement thermique (40).

7. Moteur à combustion interne à allumage commandé (12) selon l'une quelconque des revendications précédentes, **caractérisé en ce qu'**au moins un revêtement thermique (40) est de type barrière thermique.

8. Moteur à combustion interne à allumage commandé (12) selon l'une quelconque des revendications précédentes, **caractérisé en ce qu'**au moins un revêtement thermique (40) est un matériau dont l'effusivité thermique est inférieure à 500 W.K-1.m-2.s1/2.

9. Moteur à combustion interne à allumage commandé (12) selon la revendication 6, **caractérisé en ce que** la première portion (42) du revêtement thermique (40) est de type barrière thermique et la deuxième portion (44) du revêtement thermique (40) est un matériau dont l'effusivité thermique est inférieure à 500 W.K-1.m-2.s1/2.

10. Procédé de fabrication d'un moteur à combustion interne à allumage commandé (12) selon l'une quelconque des revendications précédentes, **caractérisé en ce qu'**il comporte au moins une étape de dépôt d'un revêtement thermique (40) sur une surface supérieure (39) du toit (38) de la chambre de combustion (36) en vis-à-vis de la tête de piston (28) pour minimiser les transferts thermiques vers des pièces à l'extérieur de la chambre de combustion (36) et ainsi maintenir une température plus élevée à l'intérieur de la chambre de combustion (36).

11. Procédé de fabrication selon la revendication 11 en combinaison avec la revendication 6, **caractérisé en ce qu'**il comporte une première étape de dépôt d'une première portion (42) du revêtement thermique (40) et une deuxième étape de dépôt d'une deuxième portion (44) du revêtement thermique (40).

## Patentansprüche

1. Fremdgezündeter Verbrennungsmotor (12), umfassend:
- mindestens einen Zylinder (22), in dem ein Kolben (26) verschiebbar gelagert ist,
- mindestens zwei Ventilkanäle (32, 34), darunter einen Einlassventilkanal (34) und einen Auslassventilkanal (32),
- einen Brennraum (36), der vom Dach (38) des Brennraumes (36), von einer axialen Umfangswand (24) und vom Kolbenboden (28) begrenzt wird,
- mindestens eine thermische Beschichtung (40), die auf eine Oberseite (39) des Daches (38) des Brennraumes (36) gegenüber dem Kolbenboden (28) aufgebracht ist, um die Wärmeübertragungen zu Teilen außerhalb des Brennraumes (36) zu minimieren und so eine höhere Temperatur im Inneren des Brennraumes (36) aufrechtzuerhalten;
**gekennzeichnet:**
- **dadurch, dass** die Bereiche der Auslassventilkanäle (32) und Einlassventilkanäle (34) der Oberseite (39) nicht mit einer thermischen Beschichtung (40) versehen sind,
- und dadurch, dass die Dicke e der thermischen Beschichtung (40) variabel ist, mit mindestens einer maximalen Dicke e1, e2, die sich in der Mitte des Brennraumes (36) befindet, wonach die Dicke e der thermischen Beschichtung (40) in einer radialen Richtung zur axialen Wand (24) des Brennraumes (36) hin abnehmend ist.

2. Fremdgezündeter Verbrennungsmotor (12) nach Anspruch 1, **dadurch gekennzeichnet, dass** sich die thermische Beschichtung (40) von der Mitte des Daches (38) des Brennraumes (36) aus in einer radialen Richtung zur axialen Wand (24) des Brennraumes (36) hin bis zu 30 % bis 80 % des Durchmessers der mit einer thermischen Beschichtung (40) versehenen Oberseite (39) erstreckt.

3. Fremdgezündeter Verbrennungsmotor (12) nach einem der vorhergehenden Ansprüche, **dadurch gekennzeichnet, dass** die Dicke e der thermischen Beschichtung (40) radial gleichmäßig abnehmend ist.

4. Fremdgezündeter Verbrennungsmotor (12) nach einem der vorhergehenden Ansprüche, **dadurch gekennzeichnet, dass** die thermische Beschichtung (40) aus einem ersten Abschnitt (42) besteht, der die zwei Auslassventilkanäle (32) umfasst.

5. Fremdgezündeter Verbrennungsmotor (12) nach Anspruch 4, **dadurch gekennzeichnet, dass** die thermische Beschichtung (40) aus dem ersten Abschnitt (42), der die zwei Auslassventilkanäle (32) umfasst, und einem zweiten Abschnitt (44), der die Einlassventilkanäle (34) umfasst, besteht, wobei die Abschnitte (42,44) einen unterschiedlichen Wärmeeindringkoeffizienten oder eine unterschiedliche maximale Dicke der thermischen Beschichtung (40) aufweisen.

6. Fremdgezündeter Verbrennungsmotor (12) nach Anspruch 5, **dadurch gekennzeichnet, dass** die maximale Dicke e1 des ersten Abschnitts (42) der thermischen Beschichtung (40) größer als die maximale Dicke e2 des zweiten Abschnitts (44) der thermischen Beschichtung (40) ist.

7. Fremdgezündeter Verbrennungsmotor (12) nach einem der vorhergehenden Ansprüche, **dadurch gekennzeichnet, dass** mindestens eine thermische Beschichtung (40) vom Typ einer Wärmesperre ist.

8. Fremdgezündeter Verbrennungsmotor (12) nach einem der vorhergehenden Ansprüche, **dadurch gekennzeichnet, dass** mindestens eine thermische Beschichtung (40) ein Material ist, dessen Wärmeeindringkoeffizient kleiner als 500 W.K-1.m-2.s1/2 ist.

9. Fremdgezündeter Verbrennungsmotor (12) nach Anspruch 6, **dadurch gekennzeichnet, dass** der erste Abschnitt (42) der thermischen Beschichtung (40) vom Typ einer Wärmesperre ist und der zweite Abschnitt (44) der thermischen Beschichtung (40) ein Material ist, dessen Wärmeeindringkoeffizient kleiner als 500 W.K-1.m-2.s1/2 ist.

10. Verfahren zur Herstellung eines fremdgezündeten Verbrennungsmotors (12) nach einem der vorhergehenden Ansprüche, **dadurch gekennzeichnet, dass** es mindestens einen Schritt der Aufbringung einer thermischen Beschichtung (40) auf eine Oberseite (39) des Daches (38) des Brennraumes (36) gegenüber dem Kolbenboden (28) umfasst, um die Wärmeübertragungen zu Teilen außerhalb des Brennraumes (36) zu minimieren und so eine höhere Temperatur im Inneren des Brennraumes (36) aufrechtzuerhalten.

11. Herstellungsverfahren nach Anspruch 11 in Kombination mit Anspruch 6, **dadurch gekennzeichnet, dass** es einen ersten Schritt der Aufbringung eines ersten Abschnitts (42) der thermischen Beschichtung (40) und einen zweiten Schritt der Aufbringung eines zweiten Abschnitts (44) der thermischen Beschichtung (40) umfasst.

## Claims

1. Controlled-ignition internal combustion engine (12) comprising:
- at least one cylinder (22) in which a piston (26) is slidingly mounted,
- at least two valve lines (32, 34), including an intake valve line (34) and an exhaust valve line (32),
- a combustion chamber (36) delimited by the roof (38) of the combustion chamber (36), by a peripheral axial wall (24) and by the piston head (28),
- at least one thermal coating (40) deposited on an upper surface (39) of the roof (38) of the combustion chamber (36) facing the piston head (28) so as to minimize the heat transfers towards components outside the combustion chamber (36) and to thus maintain a higher temperature inside the combustion chamber (36);
**characterized:**
- **in that** the zones of the exhaust valve line (32) and of the intake valve line (34) of the upper surface (39) do not have any thermal coating (40),
- and **in that** the thickness e of the thermal coating (40) is variable with at least one maximum thickness e1, e2 situated in the centre of the combustion chamber (36), then the thickness e of the thermal coating (40) decreases in a radial direction towards the axial wall (24) of the combustion chamber (36).

2. Controlled-ignition internal combustion engine (12) according to Claim 1, **characterized in that** the thermal coating (40) extends from the centre of the roof (38) of the combustion chamber (36) in a radial direction towards the axial wall (24) of the combustion chamber (36) up to 30% to 80% of the diameter of the upper surface (39) provided with a thermal coating (40).

3. Controlled-ignition internal combustion engine (12) according to either one of the preceding claims, **characterized in that** the thickness e of the thermal coating (40) decreases uniformly radially.

4. Controlled-ignition internal combustion engine (12) according to any one of the preceding claims, **characterized in that** the thermal coating (40) is made up of a first portion (42) encompassing the two exhaust valve lines (32).

5. Controlled-ignition internal combustion engine (12) according to Claim 4, **characterized in that** the thermal coating (40) is made up of the first portion (42) encompassing the two exhaust valve lines (32) and of a second portion (44) encompassing the intake valve lines (34), said portions (42, 44) having a different effusivity or a different maximum thickness of thermal coating (40).

6. Controlled-ignition internal combustion engine (12) according to Claim 5, **characterized in that** the maximum thickness e1 of the first portion (42) of the thermal coating (40) is greater than the maximum thickness e2 of the second portion (44) of the thermal coating (40).

7. Controlled-ignition internal combustion engine (12) according to any one of the preceding claims, **characterized in that** at least one thermal coating (40) is of the thermal barrier type.

8. Controlled-ignition internal combustion engine (12) according to any one of the preceding claims, **characterized in that** at least one thermal coating (40) is a material whose thermal effusivity is lower than 500 W.K-1.m-2.s1/2.

9. Controlled-ignition internal combustion engine (12) according to Claim 6, **characterized in that** the first portion (42) of the thermal coating (40) is of the thermal barrier type and the second portion (44) of the thermal coating (40) is a material whose thermal effusivity is lower than 500 W.K-1.m-2.s1/2.

10. Method for manufacturing a controlled-ignition internal combustion engine (12) according to any one of the preceding claims, **characterized in that** it comprises
at least one step of depositing a thermal coating (40) on an upper surface (39) of the roof (38) of the combustion chamber (36) facing the piston head (28) so as to minimize the heat transfers towards components outside the combustion chamber (36) and to thus maintain a higher temperature inside the combustion chamber (36).

11. Manufacturing method according to Claim 11 in combination with Claim 6, **characterized in that** it comprises a first step of depositing a first portion (42) of the thermal coating (40) and a second step of depositing a second portion (44) of the thermal coating (40).
